# FASCICULE DE BREVET EUROPEEN

(11) **EP 2 182 237 B1**
(45) Date de publication et mention de la délivrance du brevet: **23.11.2011**
(21) Numéro de dépôt: 09306015.0
(22) Date de dépôt: 27.10.2009
(51) Int. Cl.: F16F 1/373, F16F 1/38

(54) **Dispositif antivibratoire**
Elastische Kupplung
Vibration isolator

(30) Priorité: 29.10.2008 FR 0805997
(43) Date de publication de la demande: 05.05.2010
(73) Titulaire: Mameri, Gaby M., 51300 Huiron (FR)
(72) Inventeur: Mameri, Gaby M., 51300 Huiron (FR)
(74) Mandataire: Poupon, Michel

(56) Documents cités:
- EP-A1- 0 163 980
- US-A- 1 876 924
- US-A- 2 472 029
- US-A1- 2002 140 146

## Description

La présente invention concerne un dispositif antivibratoire destiné à être disposé entre deux éléments rigides d'un véhicule, de manière à amortir les vibrations entre ces deux éléments.

Plus particulièrement la présente invention concerne un dispositif antivibratoire, destiné à être disposé entre deux éléments rigides, de manière à amortir les vibrations entre ces deux éléments, le dispositif comportant au moins : une armature interne tubulaire cylindrique destinée à être reliée au premier élément rigide, une armature externe tubulaire cylindrique, co-axiale avec l'armature interne selon une direction axiale longitudinale, et destinée à être reliée au deuxième élément rigide, au moins un corps en élastomère tubulaire s'étendant longitudinalement entre deux extrémités, parallèlement à l'axe longitudinal, et disposé entre les deux armatures, le dispositif comportant en outre deux moyens de compression axiale disposés à chacune des extrémités longitudinale du corps en élastomère dont au moins l'un est monté par vissage à une extrémité de l'armature interne, les deux moyens de compression étant montés déplaçables l'un par rapport à l'autre pour compresser le corps en élastomère selon la direction axiale, de manière à ce que le corps en élastomère se déforme radialement et soit maintenu par serrage dans l'armature externe, le corps en élastomère comportant selon une direction radiale, au moins un élément, formant butée de contact, adaptée à limiter la déformation du corps en élastomère selon ladite direction radiale, lorsque celui-ci est mis en compression selon ladite direction radiale.

Le document FR 2 720 132 décrit un dispositif antivibratoire du type décrit précédemment, dans lequel le corps en élastomère disposé entre les deux armatures est maintenu comprimé par le rapprochement selon la direction radiale des deux armatures. A cet effet la compression du corps en élastomère est obtenue par modification de la longueur de la ligne moyenne de la section droite de l'une au moins desdites armatures dans le sens les rapprochant.

Toutefois le dispositif antivibratoire selon l'art antérieur nécessite un montage long et compliqué.

Le document US 1 876 924 décrit un dispositif antivibratoire du type décrit précédemment, dans lequel le corps en élastomère peut être déformé selon la direction longitudinale. Toutefois le document ne divulgue aucun élément concernant une déformation selon la direction radiale.

La présente invention vise à pallier les inconvénients de l'art antérieur. A cet effet elle porte sur un dispositif antivibratoire du type décrit ci-dessus dans lequel le dispositif comporte au moins un élément tubulaire cylindrique disposé entre le corps en élastomère et l'armature externe et adapté à diminuer le diamètre interne de l'espace dans lequel le corps en élastomère est monté, pour augmenter le serrage selon la direction radiale.

Grâce à ces dispositions, le dispositif antivibratoire est facile à monter. De plus les caractéristiques d'amortissement du dispositif selon l'invention peuvent être facilement modifiées grâce au réglage du serrage du corps en élastomère selon la direction radiale et la direction longitudinale. De plus le dispositif antivibratoire selon l'invention est standard et peut être appliqué sur différents types de véhicules en adaptant, de manière simple et rapide, des moyens permettant de modifier les caractéristiques d'amortissement.

Selon d'autres caractéristiques :
- l'armature interne est reliée au premier élément rigide au moyen d'au moins un système de fixation vis-écrou déplaçable entre une position vissée et une position dévissée, et dans lequel le système vis-écrou est formé d'une tige comportant, à une première extrémité longitudinale, une tête, et à une deuxième extrémité un écrou monté sur la partie filetée de la tige, la tige étant disposée à l'intérieur de l'armature interne,
- chaque moyen de compression axiale est monté par vissage respectivement à chaque extrémité de l'armature interne et comporte un élément tubulaire conique s'étendant entre une première extrémité adaptée à être vissée sur l'armature interne, et une base, et en ce que le moyen comporte à sa base une butée périphérique adaptée à entraîner le corps en élastomère en compression lorsque les moyens de compression sont déplacés de manière à se rapprocher l'un de l'autre. ;
- l'armature interne est un tube cylindrique présentant un filetage extérieur et dans lequel les moyens de compression présentent un filetage intérieur qui coopère avec le filetage extérieur de l'armature interne dont le diamètre externe est associé au diamètre interne des moyens de compression et dont le diamètre interne est supérieur au diamètre externe de la tige de manière à pouvoir faire coulisser la tige dans l'armature interne, de manière à solidariser l'ensemble;

- le corps en élastomère présente une épaisseur « e » d'élastomère et présente une première et une deuxième face d'extrémité situées respectivement à chacune de ses extrémités longitudinales, et dans lequel chaque moyen de compression est formé d'au moins une bague présentant une dimension radiale « r » au moins égale à l'épaisseur « e » du corps en élastomère, de manière à exercer une compression sur l'ensemble de la face d'extrémité du corps en élastomère, pour augmenter le diamètre extérieur ;
- le dispositif comporte en outre au moins un tube taraudé, disposé traversant dans une ouverture du corps en élastomère et dans une ouverture des deux bagues et adapté à recevoir à chacune de ses extrémités au moins une vis disposée du côté extérieur de la bague associée, la longueur du tube taraudé étant inférieure à la longueur de l'ensemble formé par le corps en élastomère et les bagues ;
- l'armature interne est formée directement par la tige, le corps en élastomère étant comprimé radialement lorsqu'il est monté sur la tige.

La présente invention sera mieux comprise à la lecture de la description détaillée qui suit, faite en référence aux dessins annexés sur lesquels :
- la figure 1 représente une vue en perspective éclatée d'un dispositif selon l'invention et des éléments rigides auxquels il est rattaché,
- la figure 2 représente une vue en perspective éclatée du dispositif selon l'invention destiné à être disposé sur un élément rigide distinct de celui de la figure 1,
- la figure 3 représente une variante de réalisation du dispositif représenté à la figure 2,
- la figure 4 représente un dispositif non couvert par la présente invention disposé dans des troisièmes éléments rigides distincts de ceux représentés aux figures 1 à 3,
- les figures 5a, 5b, 6a, 6b représentent différents systèmes de vis-écrou sur lequel est monté le corps en élastomère ;
- les figures 7, 8 et 9 illustrent une variante de réalisation du corps en élastomère du dispositif selon l'invention, avec des butées rigides ou semi-rigides.

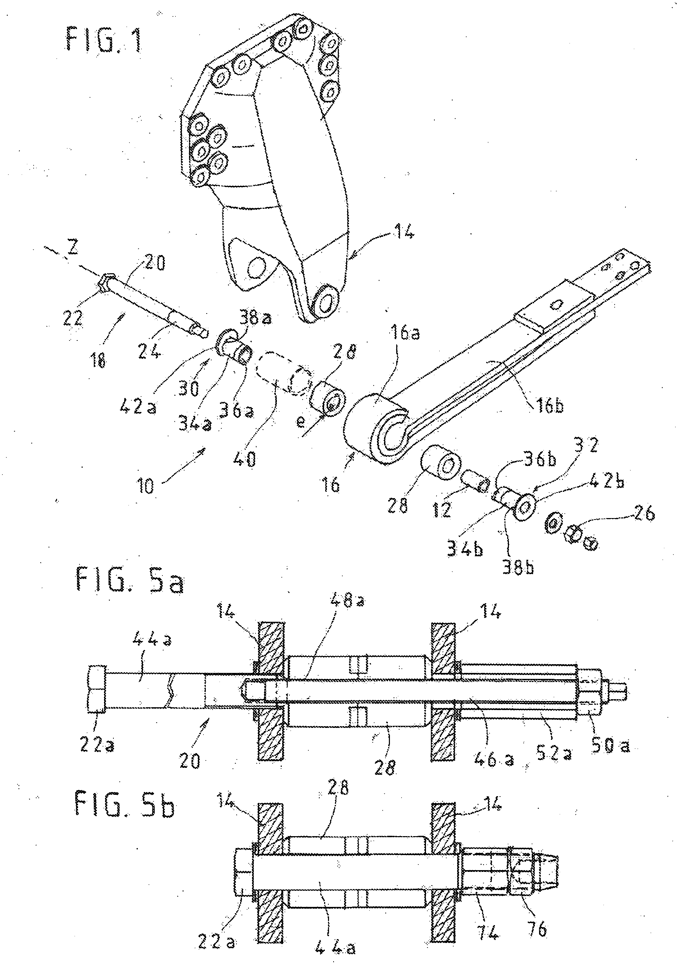

La figure 1 représente une vue éclatée du dispositif antivibratoire 10 selon l'invention, et un des éléments rigides auxquels il est relié. Le dispositif 10 comporte une armature cylindrique tubulaire interne 12 destinée à être reliée à une main de ressort 14. Le dispositif 10 comporte en outre une armature tubulaire cylindrique externe 16, co-axiale à l'armature interne 12 selon une direction axiale longitudinale Z, reliée à un deuxième élément rigide non représenté sur les figures. Le deuxième élément rigide peut être une partie de la caisse du véhicule, le dispositif antivibratoire 10 ayant alors pour rôle d'amortir les vibrations de la route vers l'habitacle du véhicule.

Tel que représentée sur les figures 1 à 3, l'armature externe 16 comporte une partie cylindrique tubulaire 16a et un bras 16b, le bras et la partie tubulaire étant formée d'une seule pièce. Le bras 16b forme une lame de ressort et permet d'augmenter l'amortissement des vibrations transmises depuis les suspensions du véhicule.

L'armature interne 12 est reliée à la main de ressort 14 au moyen d'un système de fixation 18 du type vis-écrou déplaçable entre une position vissée dans laquelle l'armature interne 12 et la main de ressort 14 sont bloquées en translation selon l'axe longitudinal Z, mais sont montées libres en rotation autour de l'axe Z , et une position dévissée dans laquelle l'armature interne 12 et la main de ressort 14 peuvent se déplacer le long de l'axe longitudinal Z.

Le système de fixation vis-écrou 18 est formé d'une tige 20 présentant à une première extrémité une tête 22 présentant la forme d'un boulon, de manière à pouvoir visser ou dévisser facilement le système de fixation. La tige 20 présente, du côté opposée à la tête 22 une partie filetée 24, sur laquelle est montée un écrou 26.

Le dispositif antivibratoire 10 comporte en outre un corps en élastomère 28 tubulaire disposé entre l'armature interne 12 et l'armature externe 16. Le corps en élastomère 28 s'étend longitudinalement entre deux extrémités, parallèlement à l'axe longitudinal Z. Tel que représenté sur les figures, le corps en élastomère peut être réalisé en deux parties qui se juxtaposent l'une à l'autre lors du montage de manière à faciliter ce dernier. Le corps en élastomère 28 est maintenu en place par deux moyens de compression axiale 30, 32 disposés respectivement à chacune des extrémités longitudinales du corps en élastomère 28. Les moyens de compression 30, 32 coopèrent ensemble de manière à compresser le corps en élastomère 28 selon la direction axiale Z. En effet lorsque les deux moyens 30, 32 sont mis bout à bout, la longueur de l'ensemble formé par les deux moyens de compression est inférieure à celle du corps en élastomère 28.

Les moyens de compression 30, 32 sont formés chacun par un élément tubulaire conique 34a, 34b s'étendant entre une première extrémité 36a, 36b et une deuxième extrémité 38a, 38b, la première extrémité 36a, 36b présentant un diamètre extérieur inférieur à celui de la deuxième extrémité 38a, 38b. La première extrémité 36a, 36b de chaque élément tubulaire conique 34a, 34b est adaptée à être vissée sur l'armature interne 12. Les deux moyens de compression 30, 32 sont respectivement montés par vissage à chaque extrémité de l'armature interne 12. Le réglage longitudinal des moyens de compression 30, 32, de manière à ce qu'ils se rapprochent l'un de l'autre, est réalisé par vissage de chaque moyen de compression 30, 32 sur l'armature interne 12.

Chaque moyen de compression 30, 32 comporte à sa deuxième extrémité 38a, 38b une butée circulaire périphérique 42a, 42b adaptée à entraîner le corps en élastomère 28 en compression selon l'axe longitudinal Z lorsque que les moyens de compression sont déplacés de manière à se rapprocher l'un de l'autre.

Lorsque les moyens de compression sont rapprochés l'un de l'autre le corps en élastomère est compressé selon la direction longitudinale Z et est déformé dans un plan radial perpendiculaire à la direction longitudinale Z. Le corps en élastomère 28 tend à augmenter son diamètre selon la direction radiale et est alors maintenu par serrage dans l'armature externe 16.

Selon une variante de réalisation illustrée à la figure 1, le dispositif comporte un élément tubulaire cylindrique 40 disposé entre le corps en élastomère 28 et l'armature externe 16 et adapté à diminuer le diamètre interne de l'espace dans lequel le corps en élastomère est monté, pour augmenter le serrage selon la direction radiale. L'élément tubulaire cylindrique 40 permet de modifier le diamètre extérieur du manchon formé par l'armature interne, le corps en élastomère et l'élément cylindrique, l'ensemble formant le manchon étant placé dans l'armature externe 16. Grâce à ces dispositions il est possible d'adapter les dimensions extérieures du manchon au diamètre intérieur de l'armature externe. Le dispositif peut donc être monté facilement sur différents types de remorques, véhicules de type camion ou tracteur, et tout matériel industriel par un ajout ou un retrait d'un élément tubulaire 40. Par exemple le diamètre intérieur de l'armature externe peut varier de 58 à 70 mm et le diamètre extérieur du manchon peut varier de 58 à 70 mm.

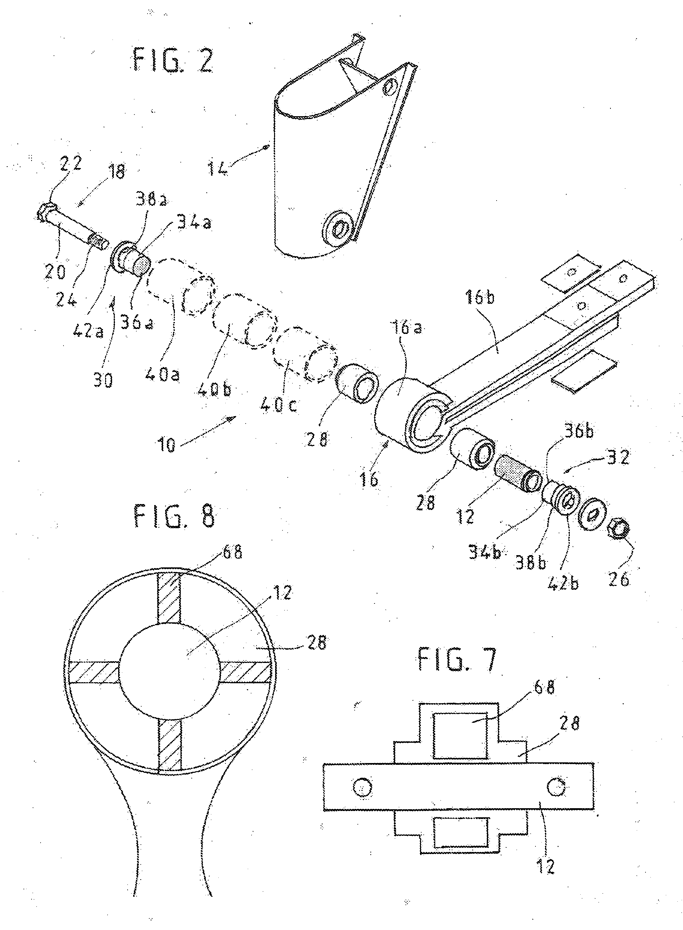

Selon une variante de réalisation illustrée sur la figure 2, dispositif anti-vibratoire 10 peut comporter plusieurs éléments tubulaires cylindriques 40a, 40b, 40c, superposés les uns aux autres, dont le diamètre extérieur peut respectivement varier de 58 à 62 mm, de 62 à 67 mm et de 67 à 70 mm.

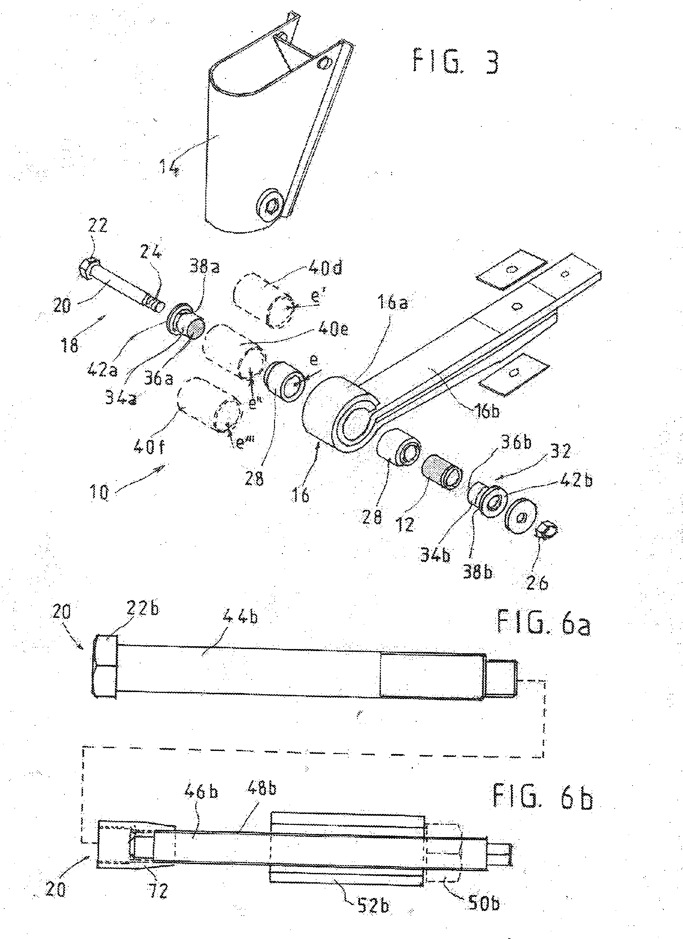

Selon une autre variante représentée sur la figure 3, le dispositif comporte un seul élément tubulaire 40d, 40 e ou 40f, dont l'épaisseur est choisie par rapport aux diamètres intérieur de l'armature externe 16 et au diamètre extérieur du corps en élastomère. Le diamètre interne et le diamètre externe de l'élément 40d sont, par exemple, 58 et 62 mm. Ceux de l'élément 40^{e} sont respectivement 58 et 67 mm, et ceux de l'élément 40f sont respectivement 58 et 70 mm. Les valeurs 62, 67 et 70 mm correspondent aux différentes valeurs de diamètre intérieur de l'armature externe 16.

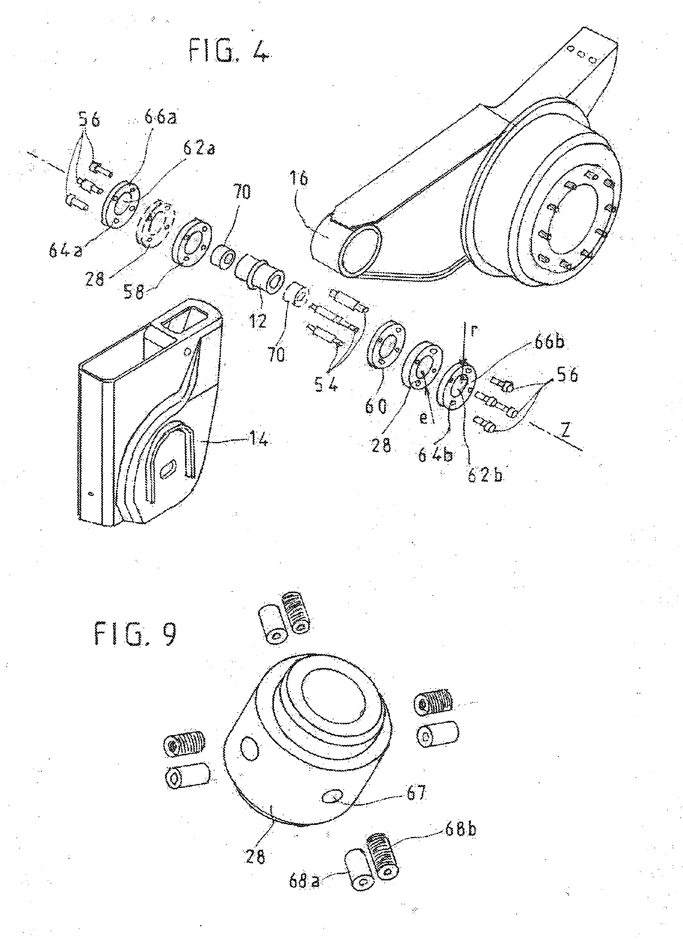

Selon une autre variante représentée sur les figures 7, 8 et 9, le corps en élastomère comporte au moins trou 67 adapté à recevoir un élément 68, disposé selon une direction radiale, formant une butée de contact, semi-rigide ou rigide, par exemple en fer 68a, ou bien un ressort 68b, et adapté à limiter la déformation du corps en élastomère selon la direction radiale lorsque le corps en élastomère est mis en compression selon la direction radiale, de manière à limiter la destruction rapide du corps en élastomère, c'est-à-dire sa détérioration dans le temps. L'élément 68 peut présenter, en section, différentes formes telles qu'une forme cylindrique, telle que visible sur la figure 9, parallélépipédique ou triangulaire. Les éléments 68 sont montés dans une ouverture traversante selon une direction radiale du corps en élastomère. Sur la figure 8 l'ouverture est débouchante des deux côtés du corps en élastomère.

Le dispositif antivibratoire est monté de la manière suivante:
Le corps en élastomère 28 est monté sur l'armature interne 12. Les deux moyens de compression 30, 32 sont vissés partiellement à chacune des extrémités de l'armature interne 12. L'ensemble est mis en place dans l'armature externe 16 et les deux moyens de compression 30, 32 sont vissés de manière à exercer une certaine pression selon l'axe longitudinal Z, de manière à déformer radialement le corps en élastomère 28, contenant au moins une butée 68.

L'ensemble est alors monté sur le premier élément rigide 14 et maintenu en place par l'intermédiaire du système de fixation vis-écrou 18 qui comporte une tige 20 inséré au travers d'une ouverture traversante réalisée dans le premier élément rigide 14 et au travers de l'armature interne 12. L'écrou 26 du système vis-écrou 18 est vissé de manière à ce que l'ensemble formé par le premier élément rigide 14, l'armature interne 12 et l'armature externe 16 ne peuvent plus être déplacés en translation parallèlement à l'axe longitudinal Z.

La figure 4 illustre un dispositif, dans lequel le système de fixation vis-écrou 18 comporte quatre tubes taraudés 54 dans lesquels est insérée, à chaque extrémité, une vis 56. De plus les moyens de compression sont réalisés au moyen de deux bagues 66a, 66b. Chaque bague présente une ouverture centrale circulaire 62a, 62b, et présente au moins quatre ouvertures périphériques 64a, 64b parallèles à la direction longitudinale, perpendiculaires à un plan radial, au travers desquelles sont disposées les tubes taraudés 54. Le dispositif antivibratoire illustré à la figure 4 comporte en outre au moins une pièce supplémentaire 58, 60 adaptée à modifier la longueur du manchon selon l'axe longitudinal Z et permettant d'orienter la déformation du corps en élastomère 28 selon la direction radiale. La pièce supplémentaire peut être rigide ou semi-rigide. Le corps en élastomère 28 présente une épaisseur « e » d'élastomère et présente une première et une deuxième face d'extrémité situées respectivement à chacune de ses extrémités longitudinales. Chaque moyen de compression 30, 32 est formé d'au moins une bague 66a, 66b présentant une dimension radiale « r » au moins égale à l'épaisseur « e » du corps en élastomère, de manière à exercer une compression sur l'ensemble de la face d'extrémité du corps en élastomère 28.

La longueur de l'armature interne 12 peut être modifiée au moyen d'armatures secondaires 70.

Le dispositif antivibratoire selon ce dispositif est monté de la manière suivante : le corps en élastomère 28 est monté sur l'armature interne 12. Puis les bagues 66a, 66b sont montées sur l'armature interne et les vis sont vissées de manière à maintenir l'ensemble des pièces formant un manchon. Puis le manchon ainsi obtenu est monté dans l'armature externe 16 et les vis sont vissées de manière à amener le corps en élastomère en compression selon l'axe longitudinal. Les bagues 66a, 66b sont mises en butée à chacune des extrémités de l'armature interne 12. Puis les tubes taraudés 54 et les huit vis 56 sont mises en place puis serrées jusqu'à obtenir la déformation radiale souhaitée du corps en élastomère 28, avec ou sans butée, tel qu'illustré à la figure 9.

Selon un autre mode de réalisation illustré sur les figures 5 et 6, le corps en élastomère 28 est directement monté sur la tige 20 du système de fixation vis-écrou 18. La tige 20 est réalisée en deux parties longitudinales 44, 46 qui sont disposées dans le prolongement l'une de l'autre lors du montage, tel que représenté sur la figure 5a. La première partie 44a, 44b présente un diamètre extérieur supérieur à celui de la deuxième partie 46a, 46b. Par exemple la première partie présente un diamètre de 30 mm, et la deuxième partie 46a, 46b présente un diamètre de 20 mm. La partie secondaire présente sur sa paroi extérieure un filetage 48a, 48b. Le corps en élastomère est initialement disposé sur la deuxième partie 46a, 46b et se trouve en compression monté à l'intérieur de l'armature externe 16, non visible sur les figures 5 et 6, qui elle-même est montée dans la main de ressort 14.

La première partie 44a, 44b est vissée dans un premier sens de rotation à son extrémité sur la deuxième partie 46a, 46b. Lorsque la première partie 44a, 44b est complètement vissée sur la deuxième partie 46a, 46b, le mouvement de rotation dans le premier sens entraîne le déplacement en translation de la première partie 44a, 44b qui vient se placer à l'intérieur du corps en élastomère 28. Le corps en élastomère est alors disposé sur la première partie 44a, 44b qui présente un diamètre extérieur supérieur. Le corps en élastomère est alors compressé radialement. L'entretoise 52a, 52b sert d'appui pour serrage et facilité le passage de la première partie 44a, 44b dans le corps en élastomère 28..

Selon une variante de réalisation la partie 46b de la tige reçoit un embout 72. L'embout présente une forme conique présentant un diamètre extérieur qui diminue du côté orienté vers la deuxième partie 46b. Le montage s'effectue de la même manière que celui décrit précédemment. Lorsque la première partie de tige 44b est vissée sur la deuxième partie 46b, le déplacement de la tige 44b vers le corps en élastomère 28 entraîne son insertion dans le corps en élastomère par l'intermédiaire de l'embout conique 72. Les tiges 44a et 46a comportent sur leur tête un six pans extérieur qui permet de désolidariser, à l'aide d'un clé, respectivement la tige 46a du boulon 44a et la tige 46b du boulon 44b après montage du corps en élastomère sur la tige 44a et 46a.

Après montage, la deuxième partie de la tige 46a, 46b est désolidarisée de la première partie 44a, 44b et au moins un écrou 74, 76 vient serrer selon la direction longitudinale. La première tige 44a, 44b est munie d'un écrou réversible pour régler le serrage selon la direction longitudinale.

La présente invention n'est pas limitée aux modes de réalisation décrits et illustrés qui n'ont été donnés qu'à titre d'exemples.

## Revendications

1. Dispositif antivibratoire, destiné à être disposé entre deux éléments rigides, de manière à amortir les vibrations entre ces deux éléments, le dispositif comportant au moins:
une armature interne tubulaire cylindrique (12) destinée à être reliée au premier élément rigide (14),
une armature externe (16) tubulaire cylindrique, co-axiale avec l'armature interne (12) selon une direction axiale longitudinale (Z), et destinée à être reliée au deuxième élément rigide,
au moins un corps en élastomère (28) tubulaire s'étendant longitudinalement entre deux extrémités, parallèlement à l'axe longitudinal (Z), et disposé entre les deux armatures (12, 16),
le dispositif comportant en outre deux moyens de compression axiale (30, 32) disposés à chacune des extrémités longitudinale du corps en élastomère (28) dont au moins l'un est monté par vissage à une extrémité de l'armature interne (12), les deux moyens de compression (30, 32) étant montés déplaçables l'un par rapport à l'autre pour compresser le corps en élastomère (28) selon la direction axiale (Z), de manière à ce que le corps en élastomère (28) se déforme radialement et soit maintenu par serrage dans l'armature externe (16),
le corps en élastomère (28) comportant selon une direction radiale, au moins un élément (68), formant butée de contact, adaptée à limiter la déformation du corps en élastomère selon ladite direction radiale, lorsque celui-ci est mis en compression selon ladite direction radiale,
**caractérisé en ce que** le dispositif comporte au moins un élément tubulaire cylindrique (40) disposé entre le corps en élastomère (28) et l'armature externe (16) et adapté à diminuer le diamètre interne de l'espace dans lequel le corps en élastomère est monté, pour augmenter le serrage selon la direction radiale.

2. Dispositif antivibratoire selon la revendication 1, dans lequel l'armature interne (12) est reliée au premier élément rigide (14) au moyen d'au moins un système de fixation vis-écrou (18) déplaçable entre une position vissée et une position dévissée, et dans lequel le système vis-écrou (18) est formé d'une tige (20) comportant, à une première extrémité longitudinale, une tête (22) , et à une deuxième extrémité un écrou (26) monté sur la partie filetée de la tige, la tige étant disposée à l'intérieur de l'armature interne (12).

3. Dispositif selon l'une des revendications précédentes, dans lequel chaque moyen de compression (30, 32) axiale est monté par vissage respectivement à chaque extrémité de l'armature interne (12) et comporte un élément tubulaire conique (34a, 34b) s'étendant entre une première extrémité (36a, 36b) adaptée à être vissée sur l'armature interne (12), et une base (38a, 38b), et en ce que le moyen comporte à sa base une butée périphérique (42a, 42b) adaptée à entraîner le corps en élastomère (28) en compression radiale lorsque les moyens de compression sont déplacés de manière à se rapprocher l'un de l'autre.

4. Dispositif selon l'une des revendications précédente, dans lequel l'armature interne (12) est un tube cylindrique présentant un filetage extérieur (48a, 48b) et dans lequel les moyens de compression (30, 32) présentent un filetage intérieur qui coopère avec le filetage extérieur de l'armature interne (12) dont le diamètre externe est associé au diamètre interne des moyens de compression (30, 32) et dont le diamètre interne est supérieur au diamètre externe de la tige (20) de manière à pouvoir faire coulisser la tige dans l'armature interne (12), de manière à solidariser l'ensemble.

5. Dispositif selon la revendication 1, dans lequel le corps en élastomère présente une épaisseur « e » d'élastomère et présente une première et une deuxième face d'extrémité situées respectivement à chacune de ses extrémités longitudinales, et dans lequel chaque moyen de compression (30, 32) est formé d'au moins une bague (66a, 66b) présentant une dimension radiale « r » au moins égale à l'épaisseur « e » du corps en élastomère, de manière à exercer une compression sur l'ensemble de la face d'extrémité du corps en élastomère (28), pour augmenter le diamètre extérieur.

6. Dispositif antivibratoire selon la revendication précédente comportant en outre au moins un tube taraudé (54), disposé traversant dans une ouverture du corps en élastomère (28) et dans une ouverture des deux bagues (66a, 66b) et adapté à recevoir à chacune de ses extrémités au moins une vis (56) disposée du côté extérieur de la bague (66a, 66b) associée, la longueur du tube taraudé étant inférieure à la longueur de l'ensemble formé par le corps en élastomère et les bagues.

7. Dispositif selon la revendication 2 dans lequel l'armature interne (12) est formée directement par la tige (20), le corps en élastomère (28) étant comprimé radialement lorsqu'il est monté sur la tige (20).

## Claims

1. Anti-vibrational device, designed to be arranged between two rigid elements, so as absorb the vibrations between these two elements, the device comprising at least:
one internal tubular cylindrical armature (12) designed to be connected to the first rigid element (14),
one external tubular cylindrical armature (16), coaxial to the internal armature (12) according to an axial longitudinal direction (Z) and designed to be connected to the second rigid element,
at least one tubular elastomer body (28) extending longitudinally between two ends, parallel to the longitudinal axis (Z) and arranged between the two armatures (12, 16),
the device also comprising two axial compression means (30, 32) arranged at each of the longitudinal ends of the elastomer body (28) at least one of which is mounted by screwing to one end of the internal armature (12), the two compression means (30, 32) being mounted to be displaceable in relation to one another to compress the elastomer body (28) in axial direction (Z), such that the elastomer body (28) is deformed radially and is held by clamping in the external armature (16),
the elastomer body (28) comprising in one radial direction at least one element (68), forming a contact stop, adapted to limit the deformation of the elastomer body in said radial direction, when the latter is placed under compression in said radial direction,
**characterised in that** the device comprises at least one tubular cylindrical element (40) arranged between the elastomer body (28) and the external armature (16) and adapted to reduce the internal diameter of the space in which the elastomer body is mounted to increase the clamping in radial direction.

2. Anti-vibrational device according to claim 1, in which the internal armature (12) is connected to the first rigid element (14) by means of at least one screw-nut securing system (18) which can be moved between a screwed position and an unscrewed position, and in which the screw-nut system (18) is formed by a rod (20) comprising at, a first longitudinal end, a head (22), and, at a second end, a nut (26) mounted on the threaded part of the rod, the rod being arranged on the inside of the internal armature (12).

3. Device according to one of the preceding claims, in which each axial compression means (30, 32) is mounted by screwing respectively to each end of the internal armature (12) and comprises a conical tubular element (34a, 34b) extending between a first end (36a, 36b) adapted to be screwed onto the internal armature (12) and a base (38a, 38b), and in that the means comprises at its base a peripheral stop (42a, 42b) adapted to drive the elastomer body (28) in radial compression when the compression means are displaced so as to move closer to one another.

4. Device according to one of the preceding claims, in which the internal armature (12) is a cylindrical tube with an external thread (48a, 48b) and in which the compression means (30, 32) have an internal thread which cooperates with the external thread of the internal armature (12), the external diameter of which is associated with the internal diameter of the compression means (30, 32) and the internal diameter of which is greater than the external diameter of the rod (20) so as to be able to slide the rod into the internal armature (12) in order to join the assembly.

5. Device according to claim 1, in which the elastomer body has a thickness "e" of elastomer and has a first and a second end face located respectively at each of its longitudinal ends and in which each compression means (30, 32) is formed by at least one ring (66a, 66b) having a radial dimension "r" which is at least equal to the thickness "e" of the elastomer body, so as to exert compression on the assembly of the end face of the elastomer body (28) to increase the external diameter.

6. Anti-vibrational device according to the preceding claim also comprising at least one threaded tube (54), arranged passing through an opening in the elastomer body (28) and an opening of the two rings (66a, 66b) and adapted to receive at each of its ends at least one screw (56) arranged from the external side of the associated ring (66a, 66b), the length of the threaded tube being less than the length of the assembly formed by the elastomer body and the rings.

7. Device according to claim 2 in which the internal armature (12) is formed directly by the rod (20), the elastomer body (28) being compressed radially when it is mounted on the rod (20).

## Patentansprüche

1. Schwingungsdämpfungsvorrichtung, die dazu eingerichtet ist, zwischen zwei steifen Elementen angeordnet zu sein, um Schwingungen zwischen diesen beiden Elementen zu dämpfen, wobei die Vorrichtung wenigstens einen röhrenartigen zylindrischen Innenanker (12), der dazu eingerichtet ist, mit dem ersten steifen Element (14) verbunden zu sein,
einen röhrenartigen zylindrischen Außenanker (16), der in einer axialen Längsrichtung (Z) koaxial mit dem Innenanker (12) und der dazu eingerichtet ist, mit dem zweiten steifen Element verbunden zu sein,
einen röhrenartigen Elastomerkörper (28) aufweist, der sich in Längsrichtung zwischen den beiden Enden sowie parallel zu der Längsachse (Z) erstreckt und zwischen den beiden Ankern (12, 16) angeordnet ist,
wobei die Vorrichtung weiterhin über zwei axiale Kompressionsmittel (30, 32) verfügt, die an jedem der in Längsrichtung des Elastomerkörpers (28) gelegenen Enden angeordnet sind und von denen wenigstens eines durch Verschrauben an einem Ende des Innenankers (12) angebracht ist, wobei die beiden Kompressionsmittel (30, 32) in Bezug aufeinander verschiebbar angebracht sind, um den Elastomerkörper (28) in axialer Richtung (Z) zusammenzudrücken, so dass sich der Elastomerkörper (28) radial verformt und durch Verklemmen in dem Außenanker (16) gehalten ist, wobei der Elastomerkörper (28) in radialer Richtung wenigstens ein Element (68) aufweist, das einen Kontaktanschlag bildet, der dazu eingerichtet ist, die Verformung des Elastomerkörpers in radialer Richtung zu begrenzen, wenn dieser in radialer Richtung zusammengedrückt ist, **dadurch gekennzeichnet, dass** die Vorrichtung wenigstens ein röhrenartiges zylindrisches Element (40) aufweist, das zwischen dem Elastomerkörper (28) und dem Außenanker (16) angeordnet und dazu eingerichtet ist, den Innendurchmesser des Raums, in dem der Elastomerkörper angebracht ist, zu verkleinern, um das Verklemmen in radialer Richtung zu verstärken.

2. Schwingungsdämpfungsvorrichtung nach Anspruch 1, bei der der Innenanker (12) mit dem ersten steifen Element (14) über wenigstens ein Schrauben-Mutter-Befestigungssystem (18) zwischen einer angezogenen Stellung und einer gelösten Stellung verschiebbar verbunden ist und bei der das Schrauben-Mutter-System (18) aus einem Stift (20) gebildet ist, der an einem ersten Ende in Längsrichtung einen Kopf (22) und an einem zweiten Ende eine Mutter (26) aufweist, die auf dem mit einem Gewinde versehenen Teil des Stifts angebracht ist, wobei der Stift im Inneren des Innenankers (12) angeordnet ist.

3. Vorrichtung nach einem der vorangehenden Ansprüche, bei der jedes axiale Kompressionsmittel (30, 32) durch Verschrauben jeweils an jedem Ende des Innenankers (12) angebracht ist und ein röhrenartiges kegelförmiges Element (34a, 34b) aufweist, das sich zwischen einem ersten Ende (36a, 36b), das dazu eingerichtet ist, auf den Innenanker (12) geschraubt zu sein, sowie einer Basis (38a, 38b) erstreckt und **dadurch gekennzeichnet, dass** das Mittel an seiner Basis einen umfänglichen Anschlag (42a, 42b) aufweist, der dazu eingerichtet ist, den radial zusammengedrückten Elastomerkörper (28) mitzunehmen, wenn die Kompressionsmittel derart verschoben werden, dass sie sich einander annähern.

4. Vorrichtung nach einem der vorangehenden Ansprüche, bei der der Innenanker (12) ein zylindrisches Rohr mit einem Außengewinde (48a, 48b) ist und bei der die Kompressionsmittel (30, 32) ein Innengewinde aufweisen, das in das Außengewinde des Innenankers (12) passt, dessen Außendurchmesser mit dem Innendurchmesser der Kompressionsmittel (30, 32) verbunden ist und dessen Innendurchmesser größer als der Außendurchmesser des Stifts (20) ist, so dass der Stift in dem Innenanker (12) verschiebbar ist, um die Einheit zusammenzuhalten.

5. Vorrichtung nach Anspruch 1, bei der der Elastomerkörper eine Elastomerdicke "e" sowie eine erste und eine zweite Endseite aufweist, die jeweils an jedem seiner Enden in Längsrichtung angeordnet sind, und bei der jedes Kompressionsmittel (30, 32) aus wenigstens einem Ring (66a, 66b) gebildet ist, der eine radiale Größe "r" aufweist, die wenigstens der Dicke "e" des Elastomerkörpers entspricht, um eine Kompression auf die gesamte Endseite des Elastomerkörpers (28) auszuüben, um den Außendurchmesser zu vergrößern.

6. Schwingungsdämpfungsvorrichtung nach dem vorangehenden Anspruch, die weiterhin wenigstens ein Rohr mit einem Innengewinde (54) aufweist, das so angeordnet ist, dass es sich durch eine Öffnung des Elastomerkörpers (28) und durch eine Öffnung der zwei Ringe (66a, 66b) erstreckt, und das dazu eingerichtet ist, an jedem seiner Enden wenigstens eine Schraube (56) aufzunehmen, die an der Außenseite des zugehörigen Rings (66a, 66b) angeordnet ist, wobei die Länge des Rohrs mit einem Innengewinde kleiner als die Länge der durch den Elastomerkörper und die Ringe gebildeten Einheit ist.

7. Vorrichtung nach Anspruch 2, bei der der Innenanker (12) direkt durch den Stift (20) gebildet ist, wobei der Elastomerkörper (28) radial zusammengedrückt ist, wenn er an dem Stift (20) angebracht ist.
